# EUROPÄISCHE PATENTSCHRIFT

(11) **EP 1 686 209 B1**
(45) Veröffentlichungstag und Bekanntmachung des Hinweises auf die Patenterteilung: **13.12.2006**
(21) Anmeldenummer: 05001532.0
(22) Anmeldetag: 26.01.2005
(51) Int. Cl.: D04H 13/00, B32B 5/02

(54) **Verfahren zur Herstellung eines Vliesverbundmaterials**
Method of production of non-woven
Procédé de préparation d'une non tissé

(43) Veröffentlichungstag der Anmeldung: 02.08.2006
(73) Patentinhaber: Nordenia Deutschland Gronau GmbH, 48599 Gronau (DE)
(72) Erfinder: Baldauf, Georg, 48366 Laer (DE); Schönbeck, Marcus, 33775 Versmold (DE)
(74) Vertreter: Albrecht, Rainer Harald

(56) Entgegenhaltungen:
- WO-A-98/16380

## Beschreibung

Die Erfindung betrifft ein Verfahren zur Herstellung eines Vliesverbundmaterials, welches elastische Bereiche und nichtelastische Bereiche aufweist, bei dem parallele Streifen aus elastischem Laminat im Abstand zueinander zwischen zwei Bahnen aus Nonwoven einkaschiert werden, wobei die Nonwoven-Bahnen in den Bereichen zwischen den Streifen unmittelbar miteinander verbunden werden und nichtelastische Bereiche bilden und wobei die jeweils einen Streifen enthaltenden Abschnitte des Vliesverbundmaterials elastische Bereiche bilden. "Nonwoven" bezeichnet ein textiles Fasermaterial aus unregelmäßig abgelegten Fasern, die mechanisch, durch Kohäsion oder Adhäsion zu einem flächigen Material verbunden sind.

Das Vliesverbundmaterial kann beispielsweise als elastische Verschlussstreifen für Babywindeln verwendet werden, welche auch die Form von Windelohren aufweisen können und jeweils einen elastischen mittleren Bereich sowie daran beidseitig anschließende weniger elastische Endabschnitte aufweisen. Die nicht bzw. weniger elastischen Endbereiche werden genutzt, um Verschlusselemente, z. b. Hakentapes, zu befestigen und den Verschlussstreifen am Windelchassis anzubringen. Zur kostengünstigen Fertigung wird eine große Zahl von elastischen Streifen mit Abstand zueinander zwischen breite Bahnen aus Nonwoven einkaschiert. Aus dem resultierenden mehrnutzigen Vliesverbundmaterial werden die für die Windelherstellung benötigten Verschlussstreifen abgetrennt.

Im Rahmen der bekannten Maßnahmen bestehen die in das Vliesverbundmaterial einkaschierten elastischen Streifen aus elastischen Folien. Als Folienmaterial kommen Elastomere, z. B. SBS-Blockcopolymere, SIS-Blockcopolymere, Polyurethane, Ethylen-Copolymere und dergleichen in Betracht. Elastomere Monofolien aus den genannten Materialien sind klebrig. Damit sie als Rollenware verarbeitet werden können, muss ein Release-Liner verwendet werden, der die elastomere Schicht an mindestens einer Fläche abdeckt. Der Release-Liner besteht beispielsweise aus Silikonpapier und dient als vorübergehendes Hilfsmittel. Bei einer Verarbeitung des Folienmaterials wird er abgetrennt und zur Entsorgung oder Wiederverwendung aufgewickelt. Erst danach kann die elastische Folie gegen eine Nonwoven-Bahn kaschiert werden. Die Handhabung einer mit einem Release-Liner abgedeckten elastischen Monofolie ist aufwendig. Hinzu kommt das Problem, das elastische Monofolien eine hohe elastische Dehnung in Maschinenlaufrichtung aufweisen und bei hohen Kaschiergeschwindigkeiten in Längsrichtung verdehnt werden. Nachdem das Laminat verklebt wurde, relaxiert die elastische Monofolie sobald keine Bahnspannung mehr vorhanden ist. Dies führt zu unkontrollierter und unerwünschter Faltenbildung des Verbundstoffes.

Im Rahmen der bekannten Maßnahmen werden aus den genannten Gründen häufig Coextrusionsfolien verwendet, die eine klebrige elastomere Kernschicht und eine Außenschicht aus einem nicht blockenden Kunststoff, z. B. einem Polyolefin, aufweisen. Die Außenschicht, auch als Skinlage bezeichnet, ermöglicht eine bessere Verarbeitung und Handhabung der elastischen Folie, trägt aber zu den gewünschten Eigenschaften des Vliesverbundmaterials nichts bei. Es handelt sich um zusätzliches Material, welches weder die elastischen Eigenschaften des Verbundvliesstoffes verbessert noch einen Beitrag zu dem angestrebten textilen Charakter des Materials leistet.

Aus der Druckschrift WO 98/16380 sind auch Vliesverbundmaterialien für Hygieneprodukte bekannt, bei denen eine vollflächige elastische Lage eines thermoplastischen Kunststoffes zwischen zwei Bahnen aus Nonwoven einkaschiert ist. Um vorgegebene elastische Eigenschaften des Vliesverbundmateriales zu erreichen, ist dieses gestreckt.

Der Erfindung liegt die Aufgabe zugrunde, ein Verfahren zur Herstellung eines bereichsweise elastischen Vliesverbundmaterials anzugeben, welches eine problemlose und einfache Verfahrensführung ermöglicht. Das Verfahrenserzeugnis soll im Vergleich zu den Vliesverbundmaterialien, die eine Coextrusionsfolie als elastischer Kern enthalten, bei gleichem Flächengewicht eine höhere Elastizität aufweisen.

Ausgehend von einem Verfahren mit den eingangs beschriebenen Merkmalen wird die Aufgabe erfindungsgemäß dadurch gelöst, dass das elastische Laminat eine klebrige elastomere Kernschicht und mindestens eine auf die klebrige Kernschicht aufgebrachte nicht blockende Außenschicht aus Nonwoven aufweist. Die Außenschicht aus Nonwoven ist in Bahnlängsrichtung nicht elastisch und wirkt außerdem als Releaseschicht zur klebrigen Folienoberfläche der nächsten Lage in aufgerollter Form. Die aus Nonwoven bestehende Außenschicht des Laminats ermöglicht die Verarbeitung des Laminats von der Rolle. Bei der weiteren Verarbeitung wird das elastische Laminat mit der Außenschicht zwischen die ebenfalls aus Nonwoven bestehenden Bahnen einkaschiert. Das elastische Laminat muss von der Abwickelstation bis zur Kaschierstation, wo es zwischen die Nonwoven-Bahnen eingebracht wird, über eine Mehrzahl von Umlenkeinrichtungen geführt werden. Für die Bahnführung ist es ausreichend, wenn das elastische Laminat an lediglich einer Außenfläche eine nicht blockende Außenschicht aus Nonwoven aufweist.

Die klebrige Kernschicht und die aus Nonwoven bestehende Außenschicht des elastischen Laminats können durch Extrusionskaschieren, durch Klebstoffkaschieren oder teilflächig durch Ultraschall verbunden werden.

Bereits eine dünne Außenschicht aus Nonwoven mit einem geringen Flächengewicht ermöglicht die Verarbeitung des elastischen Laminates von der Rolle und erfüllt insofern die ihr zugedachte Funktion. Vorzugsweise ist das Flächengewicht der aus Nonwoven bestehenden Außenschicht des elastischen Laminats daher kleiner als das Flächengewicht der auf das Laminat aufkaschierten Bahnen. Gemäß einer bevorzugten Ausführung der Erfindung weist das die Außenschicht des elastischen Laminats bildende Nonwoven ein Flächengewicht zwischen 5 g/m² und 15 g/m² auf, während die auf das Laminat aufkaschierten Bahnen jeweils ein Flächengewicht von mehr als 15 g/m², vorzugsweise ein Flächengewicht von 20 bis 35 g/m², haben. Zur Herstellung eines festen Verbundes und guten Funktionseigenschaften des Vliesverbundmaterials ist es besonders vorteilhaft, wenn die Außenschicht des elastischen Laminats und die auf das Laminat aufkaschierten Bahnen aus demselben Rohstoff bestehen. Als Rohstoffe kommen beispielsweise Polyolefine in Betracht. Im Hinblick auf die textiltechnischen Merkmale können sich die Außenschichten des elastischen Laminats und die außenseitig aufkaschierten Nonwoven-Bahnen unterscheiden. Die Außenschicht des elastischen Laminats weist zweckmäßig eine dichte Faserstruktur auf, um die klebrige Kernschicht abzudecken, wo hingegen die aufkaschierten Nonwoven-Bahnen eine lockere, möglichst voluminöse Faserstruktur aufweisen können.

Die Kernschicht des elastischen Laminats wird vorzugsweise von einer Monofolie aus der Gruppe der Styrol-Isopren-Styrol-Blockcopolymere, Styrol-Butadien-Styrol-Blockcopolymere, Styrol-Ethylen/Butylen-Styrol-Blockoopolymere, der Polyurethan oder Ethylencopolymere gebildet.

Das elastische Laminat kann als breite Bahn von einer Rolle abgezogen und in Streifen geschnitten werden. Die Streifen werden über Umlenkeinrichtungen geführt und als parallele zueinander beabstandete Streifen einer Kaschiereinrichtung zugeführt, in der die Streifen zwischen die beiden Bahnen aus Nonwoven einkaschiert werden. In einer nachgeschalteten Bearbeitungsstation kann das Vliesverbundmaterial in den elastischen Bereichen quer zur Bahnrichtung, vorzugsweise durch Ringrollen in einer Reckwalzenanordnung, gereckt werden. Entsprechende Reckwalzenanordnungen sind beispielsweise aus US 4 834 741 bekannt. Unter der Wirkung von Reckwalzen wird das Vliesverbundmaterial in Querrichtung zur Bahnlaufrichtung gedehnt, wobei die Dehnung der elastomeren Kernschicht der einkaschierten Streifen reversibel ist und die Nonwoven-Schichten irreversibel gedehnt werden. Nachdem das Vliesverbundmaterial die Reckeinrichtung durchlaufen hat, zieht sich die elastische Schicht zusammen, wobei die gedehnten und nichtelastisch rückstellbaren Schichten Verwerfungen bilden, welche das Volumen der Nonwoven-Schichten vergrößern. Durch das als Ringrollen bezeichnete Recken wird der Dehnungswiderstand des Vliesverbundmaterials in den elastischen Bereichen reduziert. Im Folgenden wird die Erfindung anhand einer lediglich ein Ausführungsbeispiel darstellenden Zeichnung erläutert. Es zeigen schematisch
- **Fig. 1**: ein Verfahren zur Herstellung eines durch Extrusionskaschieren hergestellten elastischen Laminats, welches als elastischer Kern für ein Vliesverbundmaterial verwendet wird,
- **Fig. 2**: ein Verfahren zur Herstellung eines elastischen Laminats durch Klebstoffkaschierung, welches als elastischer Kern für ein Vliesverbundmaterial verwendet wird.
- **Fig. 3**: ein Verfahren zur Herstellung eines bereichsweise elastischen Vliesverbundmaterials unter Verwendung des nach Fig. 1 oder 2 hergestellten Vorprodukts,
- **Fig. 4**: ein Querschnitt durch ein Verfahrenserzeugnis, das nach dem in Fig. 3 dargestellten Verfahren hergestellt worden ist.

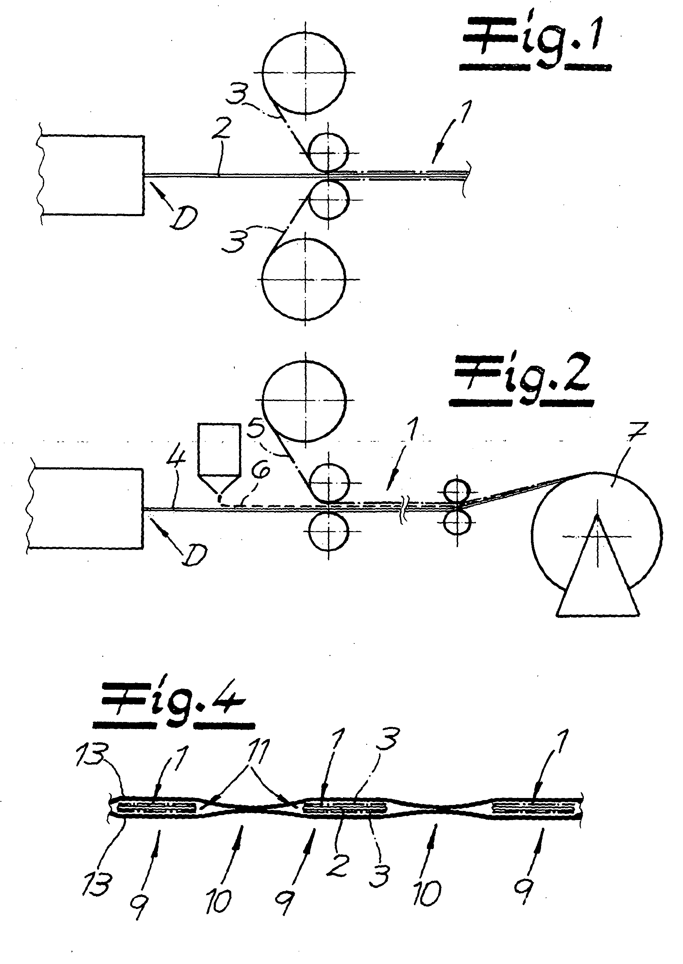

In Fig. 1 ist ein Verfahren zur Herstellung eines elastischen Laminats 1 dargestellt, welches eine klebrige elastomere Kernschicht 2 und mindestens eine auf die klebrige Kernschicht aufgebrachten nicht blockende Außenschicht 3 aus Nonwoven aufweist. Im Ausführungsbeispiel und gemäß einer bevorzugten Ausführung der Erfindung weist das elastische Laminat 1 an beiden Seiten jeweils eine Außenschicht 3 aus Nonwoven auf. Die Kernschicht 2 ist eine Monoschicht aus einem elastomeren Kunststoff, z. B. aus der Gruppe der Styrol-Isopren-Styrol-Blockcopolymere, Styrol-Butadien-Styrol-Blockcopolymere, Styrol-Ethylen/Butylen-Styrol-Blockcopolymere, Polyurethane oder Ethylen-Copolymere. Materialbahnen aus Nonwoven 3 laufen kurz hinter der Extrusionsdüse D der noch heißen elastischen Folienbahn zu und werden unter Druck extrusionskaschiert.

Im Rahmen der Erfindung liegt es auch, dass die aus Nonwoven bestehende Außenschicht 3 mittels einer Klebstoffkaschierung auf die klebrige elastomere Kernschicht 2 aufgebracht wird. Eine solche Verfahrensvariante ist in Fig. 2 dargestellt. Durch Extrusion wird ein Monofilm 4 aus einem Elastomer hergestellt. Bevor der Monofilm 4 aufgewickelt wird, wird eine Materialbahn 5 aus Nonwoven mit einem Kleber 6, vorzugsweise einem Hotmeltkleber, gegen die Elastomerfolie 4 kaschiert. Der Kleber kann vollflächig, punkt- oder streifenförmig aufgetragen werden. Im Ausführungsbeispiel wird ein elastisches Laminat 1 hergestellt, welches an einer Seite eine nicht blockende Außenschicht 3 aus Nonwoven aufweist. Das Material wird zu einer Rolle 7 aufgewickelt. Die Nonwoven-Schicht 3 bildet innerhalb der Rolle eine Trennschicht und verhindert ein Verblocken der klebrigen elastomeren Folie.

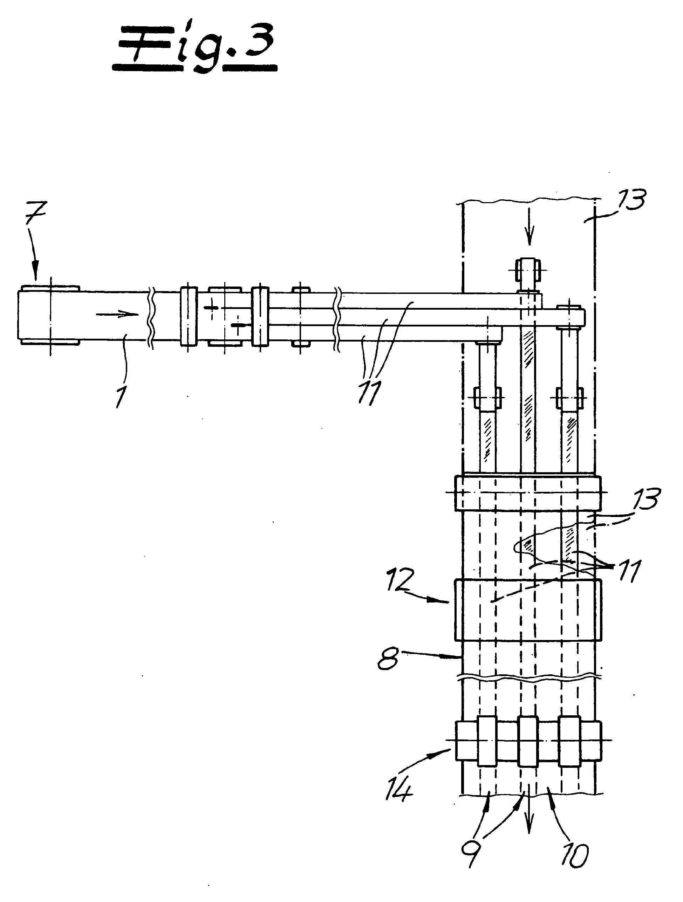

Das gemäß Fig. 1 oder Fig. 2 hergestellte elastische Laminat 1 wird als Rollenware verarbeitet und zur Herstellung eines Vliesverbundmaterials 8 verwendet, welches elastische Bereiche 9 und nichtelastische Bereiche 10 aufweist. Das Verfahren zur Herstellung des Vliesverbundmaterials ist schematisch in Fig. 3 dargestellt. Das elastische Laminat 1 wird von einer Rolle 7 abgezogen und in Streifen 11 geschnitten. Die Streifen 11 werden über Umlenkeinrichtungen geführt und als parallel zueinander beabstandete Streifen einer Kaschiereinrichtung 12 zugeführt, in der die Streifen zwischen zwei Bahnen 13 aus Nonwoven einkaschiert werden. Die Nonwoven-Bahnen 13 werden in den Bereichen zwischen den Streifen 11 unmittelbar miteinander verbunden und bilden dort die nichtelastischen Bereiche 10. Die jeweils einen Streifen 11 enthaltenden Abschnitte des Vliesverbundmaterials bilden die elastischen Bereiche 9. In einer der Kaschieranlage nachgeschalteten Station 14 wird das Vliesverbundmaterial 8 in den elastischen Bereichen 9 quer zur Bahnrichtung durch Ringrollen gereckt. Beim Ringrollen wird eine Reckwalzenanordnung aus Profilwalzen verwendet. Unter der Wirkung der Reckwalzen wird das Vliesverbundmaterial in Querrichtung zur Bahnlaufrichtung gedehnt, wobei die Dehnung der elastischen Schicht 2 reversibel ist und die äußeren Nonwoven-Schichten 13 irreversibel gedehnt werden. Nachdem das Vliesverbundmaterial die Reckeinrichtung durchlaufen hat, zieht sich die elastische Schicht zusammen, wobei die gedehnten und nichtelastisch rückstellbaren Nonwoven-Schichten 13 Verwerfungen bilden, die das Volumen der Außenschichten vergrößern. Das Material zeichnet durch einen geringen Dehnungswiderstand in den elastischen Bereichen 9 sowie durch eine textile Oberfläche auf und kann zu elastischen Windelverschlüssen weiterverarbeitet werden.

Die Fig. 4 zeigt einen Querschnitt durch das Verfahrenserzeugnis, welches durch das in Fig. 3 dargestellte Verfahren hergestellt worden ist. Das Vliesverbundmaterial weist parallele Streifen 11 aus elastischem Laminat 1 auf, die im Abstand zueinander zwischen zwei Bahnen aus Nonwoven 13 einkaschiert worden sind. Die Nonwoven-Bahnen 13 sind in den Bereichen zwischen den Streifen 11 unmittelbar miteinander verbunden und bilden dort nichtelastische Bereiche 10. Die jeweils einen Streifen 11 enthaltenen Abschnitte bilden elastische Bereiche 9. Die Streifen 11 weisen eine klebrige elastomere Kernschicht 2 und an mindestens einer Seite eine auf die klebrige Kernschicht 2 aufgebrachte nicht blockende Außenschicht 3 aus Nonwoven auf, dessen Flächengewicht vorzugsweise kleiner ist als das Flächengewicht der auf das Laminat 1 aufkaschierten Bahnen 13. Das die Außenschicht 3 des elastischen Laminats 1 bildende Nonwoven weist zweckmäßig ein Flächengewicht zwischen 5 g/m² und 15 g/m² auf, wohingegen die auf das Laminat 1 aufkaschierten Bahnen 13 jeweils ein Flächengewicht von mehr als 20 g/m², vorzugsweise ein Flächengewicht von 24 bis 35 g/m², haben. Die Außenschicht 3 des elastischen Laminats und die auf das Laminat aufkaschierten Bahnen 13 bestehen zweckmäßig aus denselben Rohstoffen, beispielsweise Polypropylenfasern. Hinsichtlich der Faserstruktur kann sich die Außenschicht 3 des elastischen Laminats von den außen aufkaschierten Nonwoven-Bahnen 13 unterscheiden. Für die Außenschicht 3 des elastischen Laminats 1 wird zweckmäßig eine dichte Faserstruktur gewählt, welche verhindert, dass die zu einer Rolle aufgewickelten Lagen verblocken. Die außenseitig aufkaschierten Nonwoven-Bahnen 13 weisen zweckmäßig eine lockere, voluminöse Faserstruktur auf, um eine angenehme textile Oberflächenstruktur zu erzeugen.

## Patentansprüche

1. Verfahren zur Herstellung eines Vliesverbundmaterials, welches elastische Bereiche und nichtelastische Bereiche aufweist, bei dem parallele Streifen aus elastischem Laminat im Abstand zueinander zwischen zwei Bahnen aus Nonwoven einkaschiert werden,
wobei die Nonwoven-Bahnen in den Bereichen zwischen den Streifen unmittelbar miteinander verbunden werden und nichtelastische Bereiche bilden und
wobei die jeweils einen Streifen enthaltenden Abschnitte des Vliesverbundmaterials elastische Bereiche bilden,
**dadurch gekennzeichnet, dass** das elastische Laminat eine klebrige elastomere Kernschicht und mindestens eine auf die klebrige Kernschicht aufgebrachte nicht blockende Außenschicht aus Nonwoven aufweist.

2. Verfahren nach Anspruch 1, **dadurch gekennzeichnet, dass** die klebrige elastomere Kernschicht und die aus Nonwoven bestehende Außenschicht des elastischen Laminats durch Extrusionskaschieren, durch Klebstoffkaschieren oder teilflächig durch Ultraschall verbunden sind.

3. Verfahren nach Anspruch 1 oder 2, **dadurch gekennzeichnet, dass** das Flächengewicht der aus Nonwoven bestehenden Außenschicht des elastischen Laminats kleiner ist als das Flächengewicht der auf das Laminat aufkaschierten Bahnen.

4. Verfahren nach Anspruch 3, **dadurch gekennzeichnet, dass** das die Außenschicht des elastischen Laminats bildenden Nonwoven ein Flächengewicht zwischen 5 g/m² und 15 g/m² aufweist und dass die auf das Laminat aufkaschierten Bahnen jeweils ein Flächengewicht von mehr als 15 g/m², vorzugsweise ein Flächengewicht von 20 bis 35 g/m², haben.

5. Verfahren nach Anspruch 3 oder 4, **dadurch gekennzeichnet, dass** die Außenschicht des elastischen Laminats und die auf das Laminat aufkaschierten Bahnen aus demselben Rohstoff bestehen.

6. Verfahren nach einem der Ansprüche 1 bis 5, **dadurch gekennzeichnet, dass** das elastische Laminat eine Monofolie aus der Gruppe der Styrol-Isopren-Styrol-Blockcopolymere, Styrol-Butadien-Styrol-Blockcopolymere, Styrol-Ethylen/Butylen-Styrol-Blockcopolymere, Polyurethane oder Ethylen-Copolymere enthält.

7. Verfahren nach einem der Ansprüche 1 bis 6, **dadurch gekennzeichnet, dass** das elastische Laminat von einer Rolle abgezogen und in Streifen geschnitten wird, dass die Streifen über Umlenkeinrichtungen geführt und als parallele, zueinander beabstandete Streifen einer Kaschiereinrichtung zugeführt werden, in der die Streifen zwischen die Bahnen aus Nonwoven einkaschiert werden.

8. Verfahren nach einem der Ansprüche 1 bis 7, **dadurch gekennzeichnet, dass** das Vliesverbundmaterial in den elastischen Bereichen quer zur Bahnrichtung, vorzugsweise durch Ringrollen, gereckt wird.

## Claims

1. Method for producing a composite nonwoven material which comprises elastic regions and non-elastic regions, in which parallel strips of elastic laminate which are spaced apart from one another are laminated between two webs of nonwoven,
wherein the nonwoven webs are joined directly to one another in the regions between the strips and form non-elastic regions, and
wherein the sections of the composite nonwoven material which respectively contain a strip form elastic regions,
**characterised in that** the elastic laminate comprises a tacky elastomeric core layer and at least one non-blocking outer layer made of nonwoven which is applied to the tacky core layer.

2. Method according to Claim 1, **characterised in that** the tacky elastomeric core layer and the nonwoven outer layer of the elastic laminate are joined by extrusion lamination, by adhesive lamination or in some areas by ultrasound.

3. Method according to Claim 1 or 2, **characterised in that** the basis weight of the nonwoven outer layer of the elastic laminate is lower than the basis weight of the webs laminated onto the laminate.

4. Method according to Claim 3, **characterised in that** the nonwoven which forms the outer layer of the elastic laminate has a basis weight of between 5 g/m² and 15 g/m², and **in that** the webs laminated onto the laminate in each case have a basis weight of more than 15 g/m², preferably a basis weight of 20 to 35 g/m².

5. Method according to Claim 3 or 4, **characterised in that** the outer layer of the elastic laminate and the webs laminated onto the laminate are made from the same raw material.

6. Method according to one of Claims 1 to 5, **characterised in that** the elastic laminate contains a monofilm selected from the group consisting of styrene-isoprene-styrene block copolymers, styrene-butadiene-styrene block copolymers, styrene-ethylene/butylene-styrene block copolymers, polyurethanes or ethylene copolymers.

7. Method according to one of Claims 1 to 6, **characterised in that** the elastic laminate is taken from a roll and cut into strips, and **in that** the strips are guided over deflection devices and supplied, as parallel strips which are spaced apart from one another, to a lamination device in which the strips are laminated between the webs of nonwoven.

8. Method according to one of Claims 1 to 7, **characterised in that** the composite nonwoven material is stretched in the elastic regions transversely to the web direction, preferably by means of ring rollers.

## Revendications

1. Procédé de production d'un matériau composite non-tissé, lequel présente des zones élastiques et des zones non élastiques, des bandes parallèles constituées de stratifié élastique écartées l'une de l'autre recouvertes entre deux pans de non-tissé,
selon lequel les pans non tissés sont directement reliés les uns aux autres entre les bandes pour former des zones non élastiques, et
dans lequel les sections du matériau composite non-tissé contenant respectivement une bande forment des zones élastiques,
**caractérisé en ce que**
le stratifié élastique présente une couche de noyau élastomère adhésive et au moins une couche externe non collante de non-tissé placée sur la couche de noyau adhésive.

2. Procédé selon la revendication 1,
**caractérisé en ce que**
la couche de noyau élastomère adhésive et la couche externe du stratifié élastique de non-tissé sont reliées par un revêtement d'extrusion, par un revêtement de matière adhésive ou partiellement par ultra-sons.

3. Procédé selon la revendication 1 ou 2,
**caractérisé en ce que**
la masse au mètre carré de la couche externe du stratifié élastique de non-tissé est plus petite que la masse au mètre carré des pans revêtus sur le stratifié.

4. Procédé selon la revendication 3,
**caractérisé en ce que**
la couche externe du stratifié élastique formant le non-tissé présente une masse au mètre carré entre 5 g/m² et 15 g/m², et les pans revêtus sur le stratifié ont chacun une masse au mètre carré de plus de 15 g/m², de préférence une masse au mètre carré de 20 à 35 g/m².

5. Procédé selon la revendication 3 ou 4,
**caractérisé en ce que**
la couche externe du stratifié élastique et les pans revêtus sur le stratifié se composent du même matériau brut.

6. Procédé selon l'une quelconque des revendications 1 à 5,
**caractérisé en ce que**
le stratifié élastique contient une monofeuille du groupe de copolymère à blocs de styrole-Isoprène-styrole, de copolymère à blocs de styrole-butadiène-styrole, de copolymère à blocs de styrole-éthylène/butylène-styrole, du polyuréthane ou du copolymère d'éthylène.

7. Procédé selon l'une quelconque des revendications 1 à 6,
**caractérisé en ce que**
le stratifié élastique est ôté d'un rouleau en tirant et est coupé en bandes, les bandes sont guidées par des dispositifs d'inversion et conduites en tant que bandes parallèles à distance l'une de l'autre à un dispositif de revêtement dans lequel les bandes sont recouvertes entre les pans de non-tissé.

8. Procédé selon l'une quelconque des revendications 1 à 7,
**caractérisé en ce que**
le matériau composite non-tissé est étiré dans les zones élastiques transversalement à la direction de pan, de préférence par des rouleaux annulaires.
